# EUROPEAN PATENT SPECIFICATION

(11) **EP 4 286 463 B1**
(45) Date of publication and mention of the grant of the patent: **05.08.2026**
(21) Application number: 22745764.5
(22) Date of filing: 21.01.2022
(51) Int. Cl.: C08J 11/08

(54) **METHOD OF REUSING RESIN SHAPED PRODUCT**
VERFAHREN ZUR WIEDERVERWENDUNG VON KUNSTHARZPRODUKT
PROCÉDÉ DE RÉUTILISATION D'UN PRODUIT MOULÉ EN RÉSINE

(30) Priority: 29.01.2021 JP 2021013862
(43) Date of publication of application: 06.12.2023
(73) Proprietor: Zeon Corporation, Tokyo 100-8246 (JP)
(72) Inventor: NAGAMUNE Tsutomu, Tokyo 100-8246 (JP); KUDO Nobuhiro, Tokyo 100-8246 (JP)
(74) Representative: Maiwald GmbH
(86) International application number: PCT/JP2022/002283
(87) International publication number: WO 2022/163543

(56) References cited:
- JP-A- 2000 063 558
- JP-A- 2000 063 558
- JP-A- 2000 169 621
- JP-A- 2006 037 049
- JP-A- 2006 187 764
- JP-A- 2008 222 826
- JP-A- 2008 511 687
- JP-A- 2012 523 970
- JP-A- H11 291 247
- JP-A- H11 293 030
- US-B2- 7 947 803

## Description

### TECHNICAL FIELD

This disclosure relates to a method of reusing a resin shaped product.

### BACKGROUND

Thermoplastic resin such as a polymer having an alicyclic structure has normally excellent properties such as transparency, heat resistance, moisture resistance, chemical resistance, and electrical properties, and is thus widely used in various fields such as optical materials, medical materials, and electrical component materials. Therefore, wastes of shaped products containing the alicyclic structure-containing polymer and processing wastes that are generated in production of the shaped products are generated in large numbers. For example, in production of optical films, in general, thermoplastic resin is shaped into a film by solution casting or melt extrusion, the film is subjected to stretching treatment as needed and wound into a roll to be supplied as a wound body of the film having a long length and a wide width. During this process, ends of the film are trimmed to generate parts normally referred to as film edges as wastes.

Recently, recycled plastic obtained by recovering wastes of shaped products formed of thermoplastic resin, grinding the wastes as needed, and pelletizing the wastes is widely used. However, when wastes of shaped products formed of a polymer resin having an alicyclic structure are reused, their strengths and physical properties such as color tone may deteriorate due to remaining of foreign substances and thermal degradation by repeating thermal processing to cause the wastes to be unable to be used for original applications.

As a method of reusing wastes of shaped products formed of a polymer resin having an alicyclic structure, Patent Literature (PTL) 1 discloses a method of reusing an alicyclic structure-containing polymer resin shaped product, including removing foreign substances in a melted state or a solution state of the alicyclic structure-containing polymer resin shaped product. PTL 2 discloses a method of reusing an alicyclic structure-containing polymer resin shaped product, including dissolving the alicyclic structure-containing polymer resin shaped product in a solvent to perform decolorization treatment with an adsorbent. PTL 3 discloses a method of reusing an alicyclic structure-containing polymer resin shaped product, including performing hydrogenation treatment.

### CITATION LIST

### Patent Literature

PTL 1: JP H11-291247 A
PTL2: JP H11-293030 A
PTL3: JP H11-293029 A

### SUMMARY

### (Technical Problem)

However, in conventional methods of reusing an alicyclic structure-containing polymer resin shaped product, there has been room for improvement in obtaining a recycled article of the resin shaped product having fewer appearance defects and good physical properties such as color tone.

Therefore, an objective of this disclosure is to provide a method of reusing a resin shaped product including an alicyclic structure-containing polymer, which can obtain a recycled article of the resin shaped product having reduced appearance defects and improved physical properties such as color tone.

### (Solution to Problem)

The inventors conducted diligent investigation with the aim of solving the problems set forth above. Through this investigation, the inventors discovered that a recycled article of a resin shaped product having reduced appearance defects and improved physical properties such as color tone can be obtained by grinding a resin shaped product containing an alicyclic structure-containing polymer to be dissolved in a mixed solvent, which contains cyclohexane and a hydrocarbon-based or aromatic solvent having a coagulation point of not more than a predetermined temperature in a predetermined percentage. The inventors completed the present disclosure based on this discovery.

Specifically, this disclosure aims to advantageously solve the problems set forth above by disclosing a method of reusing a resin shaped product, including grinding the resin shaped product containing an alicyclic structure-containing polymer to obtain shaped product ground products; and dissolving the shaped product ground products in a mixed solvent containing not less than 80 weight% and not more than 98 weight% of cyclohexane and not less than 2 weight% and not more than 20 weight% of a hydrocarbon-based or aromatic solvent having a coagulation point of -40°C or lower per 100 weight% of the mixed solvent to obtain a polymer solution. Grinding a shaped product can reduce the dissolution time. Using a mixed solvent containing a solvent having a coagulation point of -40°C or lower prevents coagulation of the solvent and the polymer solution (solution obtained by dissolving a shaped product in the mixed solvent), for example, even under cold environment such as in the winter season, regardless of temperature environment, which can improve a dissolved state of the polymer solution to reduce appearance defects of the recycled article and improve physical properties thereof such as color tone.

The presently disclosed method of reusing a resin shaped product preferably further includes sieving the shaped product ground products with a sieve of not less than φ3 mm and not more than φ15 mm between grinding the resin shaped product and dissolving the shaped product ground products. Sieving a shaped product with a sieve having a diameter of not more than the upper limit described above to reduce the sizes of the shaped product ground products for dissolution further reduces the dissolution time to improve dissolution efficiency, which can contribute to the reduction of appearance defects of the recycled article to improve physical properties thereof such as color tone as well as the reduction of process time. Moreover, setting the diameter of the sieve to be not less than the lower limit described above can inhibit the reduction of recovery efficiency due to shaped product ground products that do not pass the sieve.

In the presently disclosed method of reusing a resin shaped product, the solvent preferably has a boiling point of 150°C or lower. Setting the boiling point of a solvent to be not more than the temperature described above can reduce the boiling point of the mixed solvent. Reducing the boiling point of the mixed solvent can reduce a drying time when the mixed solvent is dried and removed from the polymer solution to recover the resin, inhibit degradation of the resin due to high-temperature drying, and inhibit remaining of the solvent in the resin, as well as inhibit generation of die build-up during pelletization (melt extrusion) due to residual solvent, which can contribute to the reduction of appearance defects of the recycled article to improve physical properties thereof such as color tone as well as the reduction of process time.

The presently disclosed method of reusing a resin shaped product preferably further includes adding an adsorbent to a dissolving system of the shaped product ground products. Adding the adsorbent can adsorb and remove foreign substances (e.g., soluble foreign substances such as antioxidant alteration products) in the polymer solution, which can contribute to the reduction of appearance defects of the recycled article to improve physical properties thereof such as color tone.

In the presently disclosed method of reusing a resin shaped product, the adsorbent is preferably acid clay, activated clay, activated alumina, or zeolite. These adsorbents can well adsorb soluble foreign substances such as antioxidant alteration products.

The presently disclosed method of reusing a resin shaped product preferably further includes filtering the polymer solution in a solution state to remove foreign substances and an adsorbent. Filtration in the solution state (solution filtration) can remove insoluble foreign substances (e.g., additional materials other than the alicyclic structure-containing polymer, such as urethane), the adsorbent, and soluble foreign substances (e.g., antioxidant alteration products) adsorbed to the adsorbent, which can contribute to the reduction of appearance defects of the recycled article to improve physical properties thereof such as color tone.

In the presently disclosed method of reusing a resin shaped product, a percentage of an amount of the shaped product ground products relative to a total amount of the mixed solvent and the shaped product ground products in the polymer solution when the solution is filtered is preferably not less than 10 weight% and not more than 20 weight%. The percentage (filtration concentration) of an amount of the shaped product relative to the total amount of the mixed solvent and the shaped product being not less than the lower limit described above can inhibit generation of die build-up due to residual solvent during pelletization (melt extrusion) that is caused by an excessive amount of solvent, which can contribute to the reduction of recovery efficiency of the resin and the inhibition of degradation of the device. The filtration concentration being not more than the upper limit described above can eliminate foreign substance generation caused by prolongation of the dissolution time and the solution filtration time and an increase in pressure difference in solution filtration, which can contribute to the reduction of appearance defects of the recycled article to improve physical properties thereof such as color tone as well as the reduction of process time.

The presently disclosed method of reusing a resin shaped product preferably further includes removing the mixed solvent from the polymer solution to recover a resin containing an alicyclic structure-containing polymer, melting the recovered resin, and filtering the melted resin in a melted state. Filtration in the melted state (melt filtration) can remove non-melting foreign substances (e.g., resin degradation components such as burnt components), which can contribute to the reduction of appearance defects of the recycled article to improve physical properties thereof such as color tone.

In the presently disclosed method of reusing a resin shaped product, the alicyclic structure-containing polymer preferably has a glass-transition temperature of not lower than 70°C and not higher than 170°C. When the glass-transition temperature (Tg) is in this range, formability of the resin during reshaping and heat resistance of the shaped item for reuse are highly balanced, which is preferable.

In the presently disclosed method of reusing a resin shaped product, the alicyclic structure-containing polymer may be selected from the group consisting of a norbornene-based polymer, a monocyclic olefin-based polymer, a cyclic conjugated diene-based polymer, a vinyl alicyclic hydrocarbon polymer, and hydrogenated products thereof, and the alicyclic structure-containing polymer may be an amorphous resin. The presently disclosed method can be suitably applied to these polymer resins in order to reduce appearance defects of the recycled article to improve physical properties thereof such as color tone.

In the presently disclosed method of reusing a resin shaped product, the resin shaped product as a raw material may have a urethane layer with a thickness of 100 nm or less. The presently disclosed method can highly remove the urethane layer as a foreign substance. Thus, the presently disclosed method can also be suitably applied to a polymer resin having a urethane layer as a raw material in order to reduce appearance defects of the recycled article to improve physical properties thereof such as color tone.

### (Advantageous Effect)

The presently disclosed method of reusing a resin shaped product can obtain a recycled article of the resin shaped product containing an alicyclic structure-containing polymer having reduced appearance defects and improved physical properties such as color tone.

### DETAILED DESCRIPTION

The following provides a detailed description of embodiments of this disclosure.

### (Method of reusing resin shaped product)

The presently disclosed method of reusing a resin shaped product (hereinafter referred to as the "presently disclosed method") includes grinding the resin shaped product containing an alicyclic structure-containing polymer to obtain shaped product ground products ("grinding step"); and dissolving the shaped product ground products in a mixed solvent containing not less than 80 weight% and not more than 98 weight% of cyclohexane and not less than 2 weight% and not more than 20 weight% of a hydrocarbon-based or aromatic solvent having a coagulation point of -40°C or lower per 100 weight% of the mixed solvent to obtain a polymer solution ("dissolution step"). The presently disclosed method may further include any one or more of the following steps:
- sieving the shaped product ground products (sieving step) between grinding the resin shaped product and dissolving the shaped product ground products;
- adding an adsorbent to a dissolving system of the shaped product ground products (adsorbent addition step);
- filtering the polymer solution in a solution state to remove foreign substances and an adsorbent (solution filtration step);
- adding an antioxidant to the filtered polymer solution (antioxidant addition step);
- removing the mixed solvent from the polymer solution to recover a resin containing an alicyclic structure-containing polymer (solvent removal step);
- melting the resin recovered at the solvent removal step (melting step);
- filtering the melted resin in a melted state (melt filtration step);
- pelletizing the melted resin to obtain pelletized resins as recycled articles (pelletization step); and
- forming a resin shaped product as a recycled article from the resin (e.g., pelletized resins or resin in the melted state) or the polymer solution that has been obtained in any one of the steps described above (shaped product formation step).

### <Alicyclic structure-containing polymer>

In the presently disclosed method, the alicyclic structure-containing polymer, a component of the resin shaped product as a raw material and a recycled article has an alicyclic structure at the main chain and/or side chain, and preferably contain the alicyclic structure at the main chain from a viewpoint of mechanical strength, heat resistance, etc.

Examples of the alicyclic structure include a saturated alicyclic hydrocarbon (cycloalkane) structure and an unsaturated alicyclic hydrocarbon (cycloalkene) structure. A cycloalkane structure and a cycloalkene structure are preferable from a viewpoint of mechanical strength, heat resistance, etc., and a cycloalkane structure is the most preferable. No specific limitations are placed on the number of carbon atoms that form the alicyclic structure. However, when the number of carbon atoms is in a range of normally 4 to 30, preferably 5 to 20, and more preferably 5 to 15, properties such as mechanical strength and heat resistance are highly balanced, which is preferable. The percentage of a repeating unit formed by containing the alicyclic structure in the polymer resin having an alicyclic structure that is used in this disclosure may be selected as appropriate depending on the objective of use and is preferably 30 weight% or more, more preferably 50 weight% or more, particularly preferably 70 weight% or more, and most preferably 90 weight% or more. When the percentage of a repeating unit having the alicyclic structure in the polymer having an alicyclic structure is in this range, it is preferable from a viewpoint of transparency and heat resistance of the resin shaped product.

Specific examples of the polymer resin having an alicyclic structure include (1) a norbornene-based polymer, (2) a monocyclic olefin-based polymer, (3) a cyclic conjugated diene-based polymer, (4) a vinyl alicyclic hydrocarbon polymer, and hydrogenated products thereof. Of these examples, a norbornene-based polymer is more preferable from a viewpoint of transparency and formability.

Specific examples of the norbornene-based polymer include a ring-opening polymer of norbornene-based monomers, a ring-opening copolymer of norbornene-based monomers and other monomers that can ring-opening copolymerize with the norbornene-based monomers, and hydrogenated products thereof, an addition polymer of norbornene-based monomers, and an addition copolymer of norbornene-based monomers and other monomer that can copolymerize with the norbornene-based monomers. Of these examples, a hydrogenated product of a ring-opening (co)polymer of norbornene-based monomers is the most preferable from a viewpoint of transparency.

The polymer having an alicyclic structure as described above is selected from commonly known polymers, for example, disclosed in JP 2002-321302 A.

The glass-transition temperature (Tg) of the alicyclic structure-containing polymer may be selected as appropriate depending on the objective of reuse. For example, a higher glass-transition temperature is preferable because heat resistance of a shaped item for reuse is increased. The glass-transition temperature (Tg) of the alicyclic structure-containing polymer may be, for example, 70°C or more, preferably 100°C or more, and more preferably 120°C or more. Tg can be measured, for example, by a method described in the EXAMPLES section of the present specification.

The melt index (MI) of the alicyclic structure-containing polymer resin shaped product may be, for example, within center ±20%, preferably within center ±15%, and more preferably within center ±10%. When MI is in this range, stable extruded items and injection molded items are obtained, which is preferable. MI can be measures under conditions, for example, of 250°C to 280°C and a load of 2.16 kgf.

### <Resin shaped product>

Example of the shaped product for reuse include shaped products for optics application such as a lens, a prism, an optical film, an optical sheet, an optical disk substrate, a light guide plate, a light guide, a light fiber, and a mirror; medical shaped products such as a disposable syringe, a drug solution vial, a drug package film, an inspection cell, an inspection container, an infusion bag, and a syringe rod; shaped products for electric or electronic application such as a sheet, a film, a plate material, a vessel, and an insulating material of a wire covering, a wafer shipper, a condenser film, a circuit board, a connector, etc.; and a plate material, a pipe, a round bar, a bottle, a building material, a stationery, etc. The shaped product for reuse may be, for example, waste of a shaped product, processing waste (e.g., film edge, residue in die cutting) generated in production of a shaped product, or a used shaped product. The shaped products for reuse may be a shaped product derived from a synthesized resin (virgin material) or a shaped product derived from a reused resin (recycled article). When the shaped product for reuse has a planar shape, the thickness of the shaped product may be, for example, 30 µm or more, preferably 40 µm or more, and more preferably 50 µm or more, and may be, for example, 100 µm or less, preferably 90 µm or less, and more preferably 80 µm or less.

The resin shaped product as a raw material may have a part formed of an alicyclic structure-containing polymer as well as a part formed of an additional material other than the alicyclic structure-containing polymer. Such additional material may be in the form of a layer (coating or laminate). Such additional material may be an organic substance or an inorganic substance. Examples of such additional material include an adhesive substance (e.g., polyurethane, acrylic resin, and polyester) and a coloring substance. When the shaped product has a planar shape, such additional material may be provided on one side of the shaped product or both sides of the shaped product. Such additional material may be in the form of a layer. The thickness of the layer may be, for example, 10 nm or more, preferably 20 nm or more, and more preferably 30 nm or more, and may be, for example, 100 nm or less, preferably 90 nm or less, and more preferably 80 nm or less. The presently disclosed method can highly remove such additional material as a foreign substance, particularly when the solution filtration step is performed. Thus, the presently disclosed method can suitably be applied in order to reduce appearance defects of the recycled article to improve physical properties thereof such as color tone, even when a polymer resin having a part formed of an additional material is used as a raw material.

### <Grinding step>

The presently disclosed method includes grinding the resin shaped product to be a raw material to obtain shaped product ground products. Grinding of the resin shaped product can be performed, for example, using a grinder or a cutting machine. Grinding the resin shaped product can reduce the dissolution time of the resin shaped product to improve dissolution efficiency, which can contribute to the reduction of appearance defects of the recycled article to improve physical properties thereof such as color tone as well as the reduction of process time.

### <Sieving step>

The presently disclosed method preferably further includes sieving the shaped product ground products with a sieve having a predetermined pore diameter (φ) between grinding the resin shaped product and dissolving the shaped product ground products. The predetermined pore diameter may be, for example, 3 mm or more, preferably 4 mm or more, and more preferably 5 mm or more, and may be, for example, 15 mm or less, preferably 12 mm or less, and more preferably 10 mm or less. Sieving the shaped product with a sieve having a diameter of not more than the upper limit described above to reduce the sizes of the shaped product ground products for dissolution further reduces the dissolution time to improve dissolution efficiency, which can contribute to the reduction of appearance defects of the recycled article to improve physical properties thereof such as color tone as well as the reduction of process time. Moreover, setting the diameter of the sieve to be not less than the lower limit described above can inhibit the reduction of recovery efficiency due to shaped product ground products that do not pass the sieve.

### <Dissolution step>

The presently disclosed method includes dissolving the shaped product ground products in a solvent. Dissolving the shaped product ground products in a solvent can facilitate removal (e.g., removal by solution filtration) of insoluble foreign substances (e.g., resin degradation components such as burnt components, and coatings such as urethane) and removal (e.g., removal by adsorption) of soluble foreign substances (e.g., antioxidant alteration products) from the shaped product ground products. The solvent is a mixed solvent containing not less than 80 weight% and not more than 98 weight% of cyclohexane and not less than 2 weight% and not more than 20 weight% of a hydrocarbon-based or aromatic solvent having a coagulation point of -40°C or lower per 100 weight% of the mixed solvent. The coagulation point of the solvent is -40°C or lower. The coagulation point of the solvent is measured by reading the crystallization temperature with a differential scanning calorimeter. Using a mixed solvent containing a solvent having a low coagulation point can prevent coagulation of the solvent and the polymer solution, for example, even under cold environment such as in the winter season, regardless of temperature environment, which improves a dissolved state of the polymer solution to reduce appearance defects of the recycled article and improve physical properties thereof such as color tone.

No specific limitations are placed on this solvent so long as the objective of this disclosure is achieved. However, examples of the solvent include hydrocarbon-based solvents such as n-hexane (coagulation point: -95°C; boiling point: 69°C), n-heptane (coagulation point: -91°C; boiling point: 98.4°C), and methylcyclohexane (coagulation point: -126°C; boiling point: 100°C), and aromatic solvents such as toluene (coagulation point: -93°C; boiling point: 111°C), xylene (coagulation point: -50°C; boiling point: 140°C), and trimethylbenzene (coagulation point: -44.8°C; boiling point: 164.7°C). One type of the solvents may be used, or two or more types of the solvents may be used as a mixture.

Moreover, the boiling point (boiling point under an atmospheric pressure of about 101.3 kPa) of this solvent is preferably 150°C or lower, more preferably 150°C or lower, and particularly preferably 140°C or lower. The boiling point of the solvent can be measured, for example, as an equilibrium reflux boiling point. Alternatively, a solvent having the boiling point described above may be selected as appropriate from compounds for solvent with disclosed physical property value. A lower boiling point of the solvent increases drying property of the solvent to reduce a drying time when the mixed solvent is dried and removed from the polymer solution to recover the resin, inhibit degradation of the resin due to high-temperature drying, and inhibit remaining of the solvent in the resin, as well as inhibit generation of die build-up during pelletization (melt extrusion) due to residual solvent, which can contribute to the reduction of appearance defects of the recycled article to improve physical properties thereof such as color tone as well as the reduction of process time.

No specific limitations are placed on such solvent so long as the objective of this disclosure is achieved. However, examples of the solvent include hydrocarbon-based solvents such as n-hexane, n-heptane, and methylcyclohexane, and aromatic solvents such as toluene and xylene.

As this solvent, in general, a compound for solvent that is compatible with cyclohexane and is a good solvent for an alicyclic structure-containing polymer is used. The examples of the solvent presented above all correspond to such compound for solvent.

The content of this solvent in the mixed solvent may be 2 weight% or more, preferably 3 weight% or more, and more preferably 5 weight% or more per 100 weight% of the mixed solvent. When the content of the solvent is too small, the solvent and the polymer solution are likely to coagulate under cold environment such as in the winter season, which may impair operation. Too small content of the solvent also makes it difficult to precoat a filter body in a vessel containing the polymer solution (fix the filter body to a discharge hole od the vessel bottom by precipitation), which may cause the polymer solution to flow out without removing foreign substances by filtration. To prevent these problems, the content of the solvent is preferably not less than the lower limit described above. The content of this solvent in the mixed solvent may be 20 weight% or less, preferably 15 weight% or less, and more preferably 10 weight% or less per 100 weight% of the mixed solvent. When the content of the solvent is too large, resin components are likely to be precipitated from the polymer solution, which may reduce recovery efficiency of the resin recycled article and impair operation. To prevent these problems, the content of the solvent is preferably not more than the upper limit described above.

The content of cyclohexane in the mixed solvent may be the remaining total amount after removing the solvent from the mixed solvent. The content of cyclohexane in the mixed solvent may be 80 weight% or more, preferably 85 weight% or more, and more preferably 90 weight% or more per 100 weight% of the mixed solvent. The content of cyclohexane in the mixed solvent may be 98 weight% or less, preferably 97 weight% or less, and more preferably 95 weight% or less per 100 weight% of the mixed solvent.

The additive amount of the shaped product ground products (the percentage of the amount of the shaped product ground products relative to the total amount of the mixed solvent and the shaped product ground products shaped product) is not specifically limited so long as the presently disclosed method can be performed, but may be, for example, 10 weight% or more, preferably 11 weight% or more, and more preferably 12 weight% or more, and may be, for example, 20 weight% or less, preferably 19 weight% or less, and more preferably 18 weight% or less. When the additive amount of the shaped product is too small, the amount of the solvent is excess, the solvent remains even by solvent removal, die build-up is generated by the residual solvent during pelletization (melt extrusion), and the resin adheres to a discharge port for melt extrusion to be thermally deteriorated, which generates foreign substances and destabilizes strands. To prevent these problems, the additive amount of the shaped product is preferably not less than the lower limit described above. When the additive amount of the shaped product is too large, the dissolution time and the solution filtration time are prolonged, which may generate foreign substances due to an increase in pressure difference in the solution filtration. To prevent these problems, the additive amount of the shaped product is preferably not more than the upper limit described above.

The temperature when the shaped product is dissolved in the solvent is not specifically limited so long as the shaped product can be dissolved, but may be, for example, 50°C or higher, preferably 55°C or higher, and more preferably 60°C or higher, and may be, for example, 80°C or lower, preferably 75°C or lower, and more preferably 70°C or lower.

### <Adsorbent addition step>

The presently disclosed method preferably further includes adding an adsorbent to a dissolving system of the shaped product ground products. As for the phrase "adding an adsorbent to a dissolving system of the shaped product ground products", the adsorbent may be added so as to contact the polymer solution, for example, may be added to the polymer solution, may be added to the mixed solvent used for dissolving the shaped product ground products, may be added to the mixed solvent together with the shaped product ground products, or may be preliminarily added to a vessel used for dissolution. Adding the adsorbent can adsorb and remove foreign substances (e.g., soluble foreign substances such as antioxidant alteration products) in the polymer solution, which can contribute to the reduction of appearance defects of the recycled article to improve physical properties thereof such as color tone. Examples of such adsorbent include acid clay, activated clay, activated alumina, and zeolite. These adsorbents can well adsorb to soluble foreign substances such as antioxidant alteration products. The amount of the adsorbent may be, for example, 2.0 parts by weight or more, preferably 2.5 parts by weight or more, and more preferably 3.0 parts by weight or more per 100 parts by weight of the mixed solvent, and may be, for example, 5.0 parts by weight or less, preferably 4.5 parts by weight or less, and more preferably 4.0 parts by weight or less per 100 parts by weight of the mixed solvent.

### <Solution filtration step>

The presently disclosed method preferably further includes filtering the polymer solution in a solution state to remove foreign substances and an adsorbent. According to this step, filtration in the solution state (solution filtration) can remove insoluble foreign substances (e.g., additional materials other than the alicyclic structure-containing polymer, such as urethane), the adsorbent, and soluble foreign substance (e.g., antioxidant alteration products) adsorbed to the adsorbent, which can contribute to the reduction of appearance defects of the recycled article to improve physical properties thereof such as color tone. The solution filtration may be performed using a filter aid as a filtration bed. Examples of the filter aid include diatomite (e.g., product name: Radiolite) and pearlite (e.g., product name: TOPCO).

The percentage (filtration concentration) of the amount of the shaped product in the solution relative to the total amount of the mixed solvent and the shaped product in the solution during solution filtration may be not adjusted as it was during dissolution of the shaped product or may be adjusted by dilution with the mixed solvent or other operation, but may be, for example, 10 weight% or more, preferably 11 weight% or more, and more preferably 12 weight% or more, and may be, for example, 20 weight% or less, preferably 19 weight% or less, and more preferably 18 weight% or less. When the filtration concentration is too low, the amount of the solvent is excess, the solvent remains even by solvent removal, die build-up is generated by the residual solvent during pelletization (melt extrusion), and the resin adheres to a discharge port for melt extrusion to be thermally deteriorated, which generates foreign substances and destabilizes strands. To prevent these problems, the filtration concentration is preferably not less than the lower limit described above. When the filtration concentration is too high, the dissolution time and the solution filtration time are prolonged, which may generate foreign substances due to an increase in pressure difference in the solution filtration. To prevent these problems, the filtration concentration is preferably not more than the upper limit described above.

The solution filtration may be performed, for example, by pressurized filtering or vacuum filtering. As for the pressure of the pressurized filtering, the pressure difference between the inlet and the outlet of a filter may be, for example, 0.2 MPa or more, and preferably 0.24 MPa or more, and may be, for example, 1.0 MPa or less, and preferably 0.8 MPa or less. As for the pressure of the vacuum filtering, the pressure difference between the inlet and the outlet of a filter may be, for example, 0.2 MPa or more, and preferably 0.4 MPa or more. Note that the pressure difference is a pressure difference when the pressure difference is the maximum during filtration. When the pressure difference in the solution filtration is not less than the lower limit described above, the removal rate of foreign substances in the solution can be increased, while also increasing the solution filtration rate. When the pressure difference in the solution filtration is not more than the upper limit described above, load on the equipment can be reduced to increase equipment life. The temperature at which the solution filtration is performed is not specifically limited so long as the polymer solution can be filtered, but may be, for example, 50°C or higher, preferably 55°C or higher, and more preferably 60°C or higher, and may be, for example, 80°C or lower, preferably 75°C or lower, and more preferably 70°C or lower.

### <Antioxidant addition step>

The presently disclosed method preferably further includes adding an antioxidant to the filtered polymer solution. In general, an antioxidant has been added to the resin shaped product to be reused, and at least a part of this antioxidant may be altered during use of the resin shaped product. Therefore, this step allows replenishment of the antioxidant that has been lost by alteration. As the antioxidant, a normal antioxidant for an alicyclic structure-containing polymer resin can be used, and examples of the antioxidant include a phenolic antioxidant, a phosphoric antioxidant, and a sulfuric antioxidant. Of these antioxidants, a phenolic antioxidant is preferably, and an alkyl-substituted phenolic antioxidant is particularly preferably used.

As the phenolic antioxidant, various conventional commonly known phenolic antioxidants may be used, and examples of the phenolic antioxidant include acrylate compounds disclosed in JP S63-179953 A or JP H1-168643 A, such as 2-t-butyl-6-(3-t-butyl-2-hydroxy-5-methylbenzyl)-4-methylphenyl acrylate and 2,4-di-t-amyl-6-(1-(3,5-di-t-amyl-2-hydroxyphenyl)ethyl)phenyl acrylate; alkyl-substituted phenolic compounds such as octadecyl-3-(3,5-di-t-butyl-4-hydroxyphenyl)propionate, 2,2'-methylene-bis(4-methyl-6-t-butylphenol), 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis(methylene-3-(3',5'-di-t-butyl-4'-hydroxyphenyl propionate)methane [i.e., pentaerythrimethyl-tetrakis(3-(3,5-di-t-butyl-4-hydroxyphenyl propionate)], and triethylene glycol bis(3-(3-t-butyl-4-hydroxy-5-methylphenyl)propionate); and triazine group-containing phenolic compounds such as 6-(4-hydroxy-3,5-di-t-butylanilino)-2,4-bis(octylthio)-1,3,5-triazine, 4-bis(octylthio)-1,3,5-triazine, and 2-octylthio-4,6-bis-(3,5-di-t-butyl-4-oxyanilino)-1,3,5-triazine.

As the phosphoric antioxidant, various phosphoric antioxidants normally used in the general resin industry may be used, and examples of the phosphoric antioxidant include monophosphite compounds such as triphenyl phosphite, diphenylisodecyl phosphite, phenyldiisodecyl phosphite, tris(nonylphenyl)phosphite, tris(dinonylphenyl)phosphite, tris(2,4-di-t-butylphenyl)phosphite, and 10-(3,5-di-t-butyl-4-hydroxybenzyl)-9,10-dihydro-9-oxa-10-phosphaphenanthrene-10-oxide; and diphosphite compounds such as 4,4'-butylidene-bis(3-methyl-6-t-butylphenyl-di-tridecylphosphite) and 4,4'isopropylidene-bis(phenyl-di-alkyl (C12 to C15) phosphite). Of these phosphoric antioxidants, monophosphite compounds are preferable, and tris(nonylphenyl)phosphite, tris(dinonylphenyl)phosphite, and tris(2,4-di-t-butylphenyl)phosphite are particularly preferably used.

Examples of the sulfuric antioxidant include dilauryl 3,3-thiodipropionate, dimyristyl 3,3'-thiodipropionate, distearyl 3,3-thiodipropionate, laurylstearyl 3,3-thiodipropionate, pentaerythritol-tetrakis-(β-lauryl-thio-propionate), and 3,9-bis(2-dodecylthioethyl)-2,4,8,10-tetraoxaspiro[5,5]undecane.

These antioxidants may be used individually or as a combination of two or more types. The amount of the antioxidant is not specifically limited to the extent that the properties of the recycled article are not impaired, but may be, for example, 0.2 parts by weight or more, preferably 0.3 parts by weight or more, and more preferably 0.4 parts by weight or more, and may be, for example, 1.0 part by weight or less, preferably 0.8 parts by weight or less, and more preferably 0.7 parts by weight or less, per 100 parts by weight of the polymer component, as the total amount with the antioxidant contained in the resin shaped product before recycling.

### <Solvent removal step>

The presently disclosed method preferably further includes removing the mixed solvent from the polymer solution to recover a resin containing an alicyclic structure-containing polymer. Removal of the mixed solvent can be performed, for example, by drying the mixed solvent. Drying of the mixed solvent may be performed, for example, by drying by heating, drying under reduced pressure, or drying by heating under reduced pressure. The temperature at which drying by heating or drying by heating under reduced pressure are performed is not specifically limited so long as the mixed solvent can be removed, but may be, for example, 250°C or higher, preferably 260°C or higher, and more preferably 270°C or higher, and may be, for example, 320°C or lower, preferably 310°C or lower, and more preferably 300°C or lower. The pressure at which drying under reduced pressure or drying by heating under reduced pressure are performed is a pressure lower than the atmospheric pressure, and may be, for example, -90 kPa or lower, preferably -95 kPa or lower, and more preferably -100 kPa or lower. When drying by heating or drying by heating under reduced pressure is performed, the resin may be recovered in the melted state. Note that the recovered resin may be provided as a recycled resin for shaping a recycled resin shaped product, but is preferably subsequently provided for the melting step and the melt filtration step.

### <Melting step>

The presently disclosed method preferably further includes melting the resin containing an alicyclic structure-containing polymer that has been recovered at the solvent removal step. Melting can be performed by heating the recovered resin. The temperature at which melting is performed can be determined as appropriate depending on the type of the alicyclic structure-containing polymer, but may be, for example, 250°C or higher, preferably 260°C or higher, and more preferably 270°C or higher, and may be, for example, 320°C or lower, preferably 310°C or lower, and more preferably 300°C or lower. Note that, at the solvent removal step, when the resin is in the melted state, for example, by performing drying by heating or drying by heating under reduced pressure, the solvent removal step will also serve as the melting step. The resin in the melted state that has been obtained at the melting step may be provided as a recycled resin for shaping a recycled resin shaped product, but is preferably subsequently provided for the melt filtration step and the pelletization step.

### <Melt filtration step>

The presently disclosed method preferably further includes filtering the melted resin containing an alicyclic structure-containing polymer in a melted state. The melted resin obtained at the solvent removal step (when the resin is obtained in the melted state) or the melting step may be used. Melt filtration may be performed, for example, using a leaf disc type filter or a candle type filter as a filter. The mesh diameter of the filter may be, for example, 40 µm or less, preferably 20 µm or less, and preferably 10 µm or less. The pressure difference in the melt filtration may be, for example, 7 MPa or less, preferably 5 MPa or less, and more preferably 3 MPa or less. Note that the pressure difference is a pressure difference when the pressure difference is the maximum during filtration. Performing the melt filtration step can remove non-melting foreign substances (e.g., resin degradation components such as burnt components), which can contribute to the reduction of appearance defects of the recycled article to improve physical properties thereof such as color tone. When the pressure difference in the melt filtration is not more than the upper limit described above, load on the equipment can be reduced to increase equipment life. Moreover, when both of the solution filtration step and the melt filtration step are performed, a pressure difference (B) in the melt filtration is preferably larger than a pressure difference (A) in the solution filtration. In this case, as for the difference (B-A) between the pressure difference (A) in the solution filtration and the pressure difference (B) in the melt filtration, the upper limit may be, for example, 6.5 MPa or less, preferably 6 MPa or less, and more preferably 5 MPa or less. As for the difference (B-A) between the pressure difference (A) in the solution filtration and the pressure difference (B) in the melt filtration, the lower limit may be, for example, 0.3 MPa or more, preferably 0.5 MPa or more, and more preferably 1.0 MPa or more. When the difference (B-A) of the pressure differences described above is not less than the lower limit described above, the foreign substance removal rate during the solution filtration and the solution filtration rate can be increased while also further increasing the foreign substance removal rate during the melt filtration and the melt filtration rate. When the difference (B-A) of the pressure differences described above is not more than the upper limit described above, load on the equipment can be reduced to increase equipment life.

### <Pelletization step>

The presently disclosed method preferably further includes pelletizing the melted resin containing an alicyclic structure-containing polymer to obtain pelletized resins as recycled articles. The melted resin obtained at the solvent removal step (when the resin is obtained in the melted state), the melting step, or the melt filtration step may be used. A method of obtaining the pelletized resins (recycled pellets) is not specifically limited, and any of commonly known methods can be employed. Examples of the method include a method of extruding a resin, which has been obtained by heat melting the shaped product described above, into strand (rod) shapes from a strand die in the melted state, cooling the extruded resin, and subsequently cutting it with a strand cutter to be pelletized.

The temperature at which the shaped product is melted is in a range of preferably Tg + 60 (°C) to Tg + 180 (°C), and more preferably Tg + 90 (°C) to Tg + 160 (°C), when taking the glass-transition temperature of the polymer resin containing an alicyclic structure as Tg (°C). Too low temperature increases viscosity, which may make recycled pellets to be obtained nonuniform. Too high temperature degrades the resin and compounding agents, which may increase the change from the resin shaped product before reuse of the melt flow rate and the yellowness index of the recycled pellets to be obtained.

Examples of the method of cutting strands include a "cold cutting method" in which rod-shaped strands extruded from the holes of a die are cut through water-cooling solidification and a "hot cutting method" in which rod-shaped strands are cut immediately after being extruded from the holes of a die, and both methods are applicable.

As for the shape of the recycled pellets, their cross-sections (surfaces perpendicular to the strand discharge direction) are, in general, circular or oval, but may be formed into any shape with the hole shape of a molding die. The mean diameter of the pellet cross-sections is normally 0.1 mm to 10 mm, preferably 0.5 mm to 5 mm, and more preferably 1 mm to 4 mm. The length of the pellets (length in the strand discharge direction) can be freely altered by the strand cutting rate, but is normally 1 mm to 10 mm, preferably 2 mm to 8 mm, and more preferably 2 mm to 6 mm.

### <Shaped product formation step>

The presently disclosed method preferably further includes forming a resin shaped product containing an alicyclic structure-containing polymer as a recycled article from a resin containing an alicyclic structure-containing polymer (e.g., pelletized resins or resin in the melted state) or a polymer solution, which has been obtained in any one of the steps described above. Examples of the resin obtained in any one of the steps described above include pelletized resins obtained at the pelletization step and a resin in the melted state obtained at the solvent removal step (when the resin is obtained in the melted state), the melting step, or the melt filtration step. Examples of the polymer solution obtained in any one of the steps described above include a polymer solution obtained at the dissolution step (when the adsorbent addition step is not performed), the solution filtration step, or the antioxidant addition step. The resin shaped product may be formed, for example, by melt extrusion of a resin (e.g., pelletized resins) or melting and casting a resin into a forming machine (e.g., mold), by extrusion of a resin in the melted state or casting a resin in the melted state into a forming machine (e.g., mold), or by casting a polymer solution into a forming machine (e.g., mold) and then removing a solvent (e.g., drying).

When a film is formed as a recycled shaped product, the recycled shaped product formation step may be performed by shaping the recycled pellets into a film shape.

A method of shaping the recycled pellets into a film shape is not limited, and, for example, any of melt molding and solution casting may be used. Examples of the melt molding include extrusion molding in which shaping is performed by melt extrusion, as well as press molding, inflation molding, injection molding, blow molding, and stretch molding. Of these methods, extrusion molding by melt extrusion molding is preferable from a viewpoint of being able to obtain a film having excellent mechanical strength and surface accuracy. The presently disclosed production method can inhibit generation of foreign substances even by extrusion molding, in which the recycled pellets are subjected to heat history by heat melting, to obtain an optical film with low foreign substance content.

The extrusion molding is a method in which a resin is heat melted in an extruder, and then extruded from a flat die to continuously obtain a film-shaped shaped item. The extruder heats and kneads a resin and extrudes the molten body in a film shape from a die at a constant extrusion rate. The extruded molten body is drawn by a roll that is rotating at a constant rate and then cooled to be shaped. No specific limitations are place on the temperature of the roll and the layout. Examples of the flat die includes a T-die, a coat hanger die, and a fish-tail die depending on the structure of a resin distribution flow channel.

The thickness of the optical film to be obtained can be regulated by adjusting the extrusion resin temperature and the pressure or by fine-adjusting the interval of lip parts from which molten resin is extruded. The temperature of the extruded resin is normally 80°C to 180°C higher than the glass-transition temperature of the recycled pellets. Adjustment of the interval of the lip parts can be performed with a choke bar and a choke bar regulation bolt. Moreover, fine-adjustment of the interval of the lip parts is preferably performed by adjusting the temperature of a heat sleeve and using expansion or contraction by the heat of the heat sleeve. Temperature adjustment of the heat sleeve can be performed by commonly known process control, for example, PID control.

The thickness of the optical film to be obtained varies depending on the type and application of the optical film, but is normally 10 µm or more, preferably 15 µm or more, and more preferably 20 µm or more, and is normally 700 µm or less, preferably 500 µm or less, and more preferably 300 µm or less.

The optical film obtained by the presently disclosed production method may be a stretched optical film obtained by further subjecting the optical film obtained above to stretching treatment. As a method of stretching a film, commonly known stretching treatment such as uniaxial stretching, biaxial stretching, or oblique stretching can be adopted as appropriate. The stretching method is not specifically limited, but examples of the stretching method include roll-method and float-method vertical stretching, tenter-method horizontal uniaxial stretching, and simultaneous biaxial stretching and oblique stretching. The temperature at which the film before stretching is stretched is in a temperature range of preferably between Tg + 2°C and Tg + 30°C, and more preferably between Tg + 5°C and Tg + 25°C when taking the glass-transition temperature of the recycled pellets as Tg. The stretching ratio is normally 1.01 times to 30 times, preferably 1.01 times to 10 times, and more preferably 1.01 times to 5 times.

The optical film obtained by the presently disclosed production method has a small content of foreign substances and thus can suitably be used for production of optical members in display devices including a liquid crystal display device and an electroluminescence display device. The optical film may be used as a phase difference film, a protection film of a polarizing plate, a polarizing film, a brightness enhancement film, a light diffusion film, a condensing film, or a reflection film, in the display device and the optical member.

### EXAMPLES

The following provides more specific explanation of the present disclosure through examples and comparative examples. The present disclosure is not limited to these examples. In the following examples and comparative examples, "parts" and "%" refer to amounts on a weight basis unless otherwise specified.

The following methods were used in the examples and comparative examples to measure and evaluate each measurement category and evaluation category.

### <Molecular weight (Mw, Mn)>

The weight-average molecular weight (Mw) and the number-average molecular weight (Mn) were measured at 40°C as values in terms of standard polyisoprene using a gel permeation chromatography (GPC) with cyclohexane as an eluent. As a measurement device, HLC8120GPC produced by Tosoh Corporation was used.

As the standard polyisoprene, a total of 10 standard polyisoprenes, Mw = 602, 1390, 3920, 8050, 13800, 22700, 58800, 71300, 109000, and 280000, produced by Tosoh Corporation were used.

A sample was prepared by heating and dissolving a measurement specimen in cyclohexane at 40°C such that the sample concentration was 4 mg/mL.

Measurement was performed under conditions of a flow rate of 1.0 mL/min, a sample injected amount of 100 µmL, and a column temperature of 40°C, with a total of three columns: TSKgel G5000HXL, TSKgel G4000HXL, and TSKgel G2000HXL produced by Tosoh Corporation connected in series.

### <Hydrogenation rate>

The hydrogenation rate was measured by ¹H-NMR spectrum using a mixed solution of deuterated chloroform/carbon tetrachlorid (weight ratio: 1/1) as a solvent.

### <Glass-transition temperature (Tg)>

The glass-transition temperature (Tg) was measured based on JISK6911 using a differential scanning calorimeter.

### <Dissolution time>

### (Longer dissolution time elongates production cycle)

The dissolution time is a time for 100 g of sample after grinding to dissolve.

It was confirmed whether a set concentration is achieved with a predetermined solvent composition and 100 rpm of AG agitation.

The sample was sampled at each time and dried in a reduced-pressure drying oven at 120°C for 12 hours to confirm the dissolved concentration.
⊚: less than 0.5 hours
∘: not less than 0.5 hours and less than 1.0 hour
Δ: 1 hour or more

### <Foreign substance (300 µm or less)>

### (Unusable as product if the number of foreign substances is large)

The number of foreign substances in 500 g of pellets was confirmed visually and with a microscope (VHX-2000 produced by KEYENCE).

As the size of the foreign substance, the long side thereof was measured.
⊚: 0
∘: 2 or less
×: 3 or more

### <Die build-up>

### (Unusable as product if value is high; one of causes of foreign substance contamination)

The percentage of the number of die holes to which die build-up of 0.3 mm or more adhered in 4 hours (the number of adhesion holes relative to all holes) was visually confirm using a caliper.

The amount of resin that comes out of one hole is 150 kg to 200 kg in 4 hours (the number of holes: 40).
⊚: less than 10%
∘: not less than 10% and less than 30%
×: 30% or more

### <Yellowness index (ΔYi)>

### (Unusable as product due to high yellowness if value is high; resin oxidation deterioration occurs)

The pellets were injection-molded using NS20-2A produced by NISSEI PLASTIC INDUSTRIAL CO., LTD. at cylinder temperature in a range of 200°C to 300°C to produce a plate with a thickness of 3 mm.

The yellowness index (hereinafter, ΔYi) of the plate was measured with a spectrophotometer (produced by NIPPON DENSHOKU INDUSTRIES CO., LTD.; model: SE2000) that can measure the XYZ color system.
⊚: less than 0.5
∘: not less than 0.5 and less than 0.7
x: 0.7 or more

### <Method of evaluating appearance defects>

### (Unusable as product if the number of appearance defects is large)

Appearance defects were observed using a computer control epifluorescence microscope (produced by Olympus Corporation, BX61-FL) with BV excitation (435 nm) at 200-fold magnification. The film was placed on the microscope, and the number of fluorescent foreign substances in a field of view of 1 cm × 1 cm was determined as the number of foreign substances per cm² (volume: 0.4 cm³). The film was also classified depending on the size of the foreign substances and evaluated based on the criteria below.
A: The number of foreign substances with a size of 3 µm or more is 10 or less.
B: The number of foreign substances with a size of 3 µm or more is not less than 11 and not more than 29.
C: The number of foreign substances with a size of 3 µm or more is not less than 30 and not more than 99.
D: The number of foreign substances with a size of 3 µm or more is 100 or more.

### [Production Example 1. Production of raw material ring-opening shaped product]

### <A-1. Production of ring-opening alicyclic structure-containing polymer resin for raw material>

### <<A-1-1. Ring-opening polymerization>>

A nitrogen-substituted reactor was charged with 7 parts (1 weight% relative to all amounts of monomer used for polymerization) of mixture of tricyclo[4.3.0.1^{2,5}]deca-3-ene (hereinafter referred to as "DCP"), tetracyclo[4.4.0. 1^{2,5}.1^{7,10}]dodeca-3-ene (hereinafter referred to as "TCD"), and tetracyclo[9.2. 1.0^{2,10}.0^{3,8}]tetradeca-3,5,7,12-tetraene (hereinafter referred to as "MTF") (weight ratio 52/38/10) and 1600 parts of cyclohexane. Moreover, 0.55 parts of tri-i-butylaluminum and 0.21 parts of isobutyl alcohol; 0.84 parts of diisopropyl ether as a reaction modifier; and 3.24 parts of 1-hexene as a molecular weight regulator were added into the reactor. Next, 24.1 parts of 0.65% tungsten hexachloride solution that had been dissolved in cyclohexane was added into the reactor to stir these materials at 55°C for 10 minutes. Next, the reaction system was held at 55°C, while 693 parts of mixture of DCP, TCD, and MTF (weight ratio 52/38/10) and 48.9 parts of 0.65% tungsten hexachloride solution that had been dissolved in cyclohexane were each continuously dropped into the system over 150 minutes. The reaction was subsequently continued for 30 minutes and then the polymerization was ended.

After the end of the polymerization, the polymerization conversion rate of the monomer measured by gas chromatography was 100% at the end of the polymerization.

### <<A-1-2. Hydrogenation>>

The obtained ring-opening polymerization reaction liquid was moved to a pressure-tight hydrogenation reactor, and 1.4 parts of nickel catalyst supported on diatomaceous earth carrier (produced by Clariant Catalysts (Japan) K.K.; product name: T8400RL; nickel carrying ratio: 57%) and 167 parts of cyclohexane were then added into the reactor to react these materials at 180°C at a hydrogen pressure of 4.6 MPa for 6 hours. This reaction solution was filtered under pressure (produced by Ishikawajima-Harima Heavy Industries Co., Ltd.; product name: FUNDA filter) using Radiolite #500 as a filtration bed at a pressure of 0.25 MPa to remove hydrogenation catalysts, resulting in a clear and colorless solution. Next, 0.5 parts of antioxidant: pentaerythritol tetrakis[3-(3,5-di-t-butyl-4-hydroxyphenyl)propionate] (produced by Ciba Specialty Chemicals; product name: Irganox 1010) was added to the obtained solution per 100 parts of the hydrogenated product, and then dissolved. Next, the solution was sequentially filtered with a zeta-plus filter 30H (produced by CUNO Filter Systems; pore diameter: 0.5 µm to 1 µm) and further filtered with another metal fiber filter (pore diameter: 0.4 µm; produced by Nichidai Corporation) to remove minute solid contents. The hydrogen conversion rate of the ring-opening polymer hydrogenated product was 99.9%.

Next, cyclohexane as a solvent and the other volatile components were removed from the solution described above using a cylindrical evaporator (produced by Hitachi Ltd.) at a temperature of 270°C at a pressure of 1 kPa or lower, and the polymer in the melted state was passed through a polymer filter (produced by Fuji Filter Manufacturing Co. Ltd) at 270°C, extruded into strand shapes in the melted state from a die directly connected to a concentrator, and then cooled to obtain pellets A of the ring-opening polymer hydrogenated product as a ring-opening alicyclic structure-containing polymer resin for raw material (ring-opening polymer resin). The weight-average molecular weight (Mw) of the ring-opening polymer hydrogenated product that forms the pellets A was 38,000, the molecular weight distribution (Mw/Mn) was 2.5, Tg was 129°C, and AYi was 0.35.

Note that since the polymerization conversion rate during ring-opening polymer synthesis was 100% and the hydrogen conversion rate was 99.9%, high level, it is estimated that the amounts of a structural unit derived from DCP (DCP unit), a structural unit derived from TCD (TCD unit), and a structural unit derived from MTF (MTF unit) in the ring-opening polymer hydrogenated product are equal to the amount of the monomer used in production of the ring-opening polymer.

### <A-2. Production of raw material substrate film>

### <<A-2-1. Production of unstretched film for raw material>>

The obtained pellets A were dried using a hot air dryer in which air was circulated, at 70°C for 2 hours to remove moisture. Then, using a T-die-type film melt extruder (T-die width: 500 mm) having a resin melting and kneading machine equipped with a screw of 65 mmφ, in a clean room with a class of 10,000 or less, a sheet for an unstretched film A with a thickness of 100 µm and a width of 500 mm was extruded under shaping conditions of a molten resin temperature of 229°C and a T-die temperature of 229°C. The obtained sheet was wound around a roll to be recovered.

### <<A-2-2. Raw material substrate film (production of stretched film)>>

The wound and recovered sheet described above was attached to a stretching device installed in the same clean room as above, including the roll, heated at a heating roll to 139°C (Tg + 10°C), and then passed through a first roll and a second roll, which have different rotational speeds, in this order, while the sheet was uniaxially stretched at a stretching ratio of 2.0 times in the extrusion direction, at a stretching rate (pulling rate) of 15 mm/sec to obtain a stretched film A as a raw material substrate film.

### <A-3. Production of polyurethane resin composition for application>

A liquid resin composition 1 (polyurethane resin composition for application) with a solid content concentration of 2% was obtained by compounding 100 parts of polyether polyurethane water dispersion (SUPERFLEX 150HS produced by DKS Co., Ltd.) by volume of polyurethane; 15 parts of epoxy compound (DENACOL EX313 produced by Nagase ChemteX Corporation) as a cross-linker; 8 parts of silica particle water dispersion (SNOWTEX MP1040 produced by Nissan Chemical Corporation; average particle diameter: 120 nm) by volume of silica particles and 8 parts of silica particle water dispersion (SNOWTEX XL produced by Nissan Chemical Corporation; average particle diameter: 50 nm) by volume of silica particles as lubricants; 0.5 weight% of acetylene-based surfactant (SURFYNOL 440 produced by Air Products and Chemicals, Inc.) relative to the solid content total amount as a wetting agent; and water.

### <A-4. Production of raw material shaped product (multilayer film)>

The surface of the stretched film A (substrate film) obtained in A-2-2 above was subjected to discharge treatment under conditions of an output of 300 W, an electrode length of 240 mm, a distance between work electrodes of 3.0 mm, and a transfer rate of 4 m/min, using a corona treatment device (produced by KASUGA DENKI, INC.). The liquid resin composition 1 was applied onto the surface subjected to discharge treatment of the stretched film A, using a roll coater such that a dry thickness was 0.1 µm. Subsequently, the applied surface was heated at a temperature of 130°C for 60 seconds to form an easily adhesive layer (polyurethane layer) on the substrate film. This obtained a multilayer film including the substrate film and the easily adhesive layer, as a raw material shaped product. The multilayer film was slit to separate both ends of the film, and the obtained both ends of the film were wound around rolls to be recovered.

### [Example 1. Reuse of shaped product]

### <1-1. Recovery of ring-opening polymer resin from raw material shaped product>

Both ends of the wound and recovered film were ground with a grinder and passed through a sieve (punching plate) with a pore of 5 mm to recover film ground products. The ground products were placed on a belt conveyor and fed into a dissolution bath. Next, 17.6 parts of film ground products (concentration: 15%) was add to 100 parts of mixed solvent of 93% cyclohexane (coagulation point: 6.5°C; boiling point: 81.4°C) and 7% methylcyclohexane (coagulation point: -126°C; boiling point: 100°C), and 0.53 parts of acid clay (produced by Mizusawa Industrial Chemicals, Ltd.; product name: MIZUKA ACE #20) as an adsorbent was added to stir these materials at 70°C for 2 hours or more.

This solution was filtered under pressure (produced by Ishikawajima-Harima Heavy Industries Co., Ltd.; product name: FUNDA filter) using Radiolite #300 as a filtration bed at a pressure of 0.25 MPa (outlet being opened to the atmosphere) to remove the adsorbent, resulting in a clear and colorless solution. Next, an antioxidant: pentaerythritol tetrakis[3-(3,5-di-t-butyl-4-hydroxyphenyl)propionate] (produced by Ciba Specialty Chemicals; product name: Irganox 1010) was dissolved such that the antioxidant was 0.5 parts per 100 parts of the film ground products. Next, the solution was sequentially filtered with a zeta-plus filter 30H (produced by CUNO Filter Systems; pore diameter: 0.5 µm to 1 µm) and further filtered with another metal fiber filter (pore diameter: 0.4 µm; produced by Nichidai Corporation) to remove minute solid contents.

Next, cyclohexane as a solvent and the other volatile components were removed from the solution described above using a cylindrical evaporator (produced by Hitachi Ltd.) at a temperature of 270°C at a pressure of 1 kPa or lower, and the polymer in the melted state was passed through a polymer filter (produced by Fuji Filter Manufacturing Co. Ltd) at 270°C with an inlet side pressure of 5.2 MPa and an outlet side pressure of 2.0 MPa, extruded into strand shapes in the melted state from a die directly connected to a concentrator to perform melt filtration, and then cooled to obtain pellets B of the ring-opening polymer hydrogenated product as a recycled alicyclic structure-containing polymer resin.

The dissolution time of the film ground products, the degree of adhesive material (die build-up) generation to the outlet of a die after extrusion molding, the degree of foreign substance generation in the pellets B, and ΔYi of the pellets B were evaluated.

### <1-2. Production of recycled unstretched film>

The obtained pellets B were dried using a hot air dryer in which air was circulated, at 70°C for 2 hours to remove moisture. Then, using a T-die-type film melt extruder (T-die width: 500 mm) having a resin melting and kneading machine equipped with a screw of 65 mmφ, in a clean room with a class of 10,000 or less, an unstretched film B with a thickness of 100 µm and a width of 500 mm was extruded under shaping conditions of a molten resin temperature of 229°C and a T-die temperature of 229°C. The obtained sheet was wound around a roll to be recovered.

### <1-3. Production of recycled stretched film>

The wound and recovered sheet described above was attached to a stretching device installed in the same clean room as above, including the roll, heated at a heating roll to 139°C (Tg + 10°C), and then passed through a first roll and a second roll, which have different rotational speeds, in this order, while the sheet was uniaxially stretched at a stretching ratio of 2.0 times in the extrusion direction, at a stretching rate (pulling rate) of 15 mm/sec to obtain a stretched film B as a recycled stretched film (recycled shaped product).

The appearance defects of the obtained stretched film B were evaluated.

### [Example 2]

Example 2 was performed in the same way as in Example 1 with the exception that 23.5 parts (concentration: 19%) of film ground products were added to 100 parts of the mixed solvent during dissolution of the film ground products in the mixed solvent.

### [Examples 3, 4, and 6]

Examples 3, 4, and 6 were performed in the same way as in Example 1 with the exception that a mixed solvent of 93% cyclohexane and 7% toluene (coagulation point: -93°C; boiling point: 111°C) (Example 3), a mixed solvent of 98% cyclohexane and 2% methylcyclohexane (Example 4), or a mixed solvent of 81% cyclohexane and 19% methylcyclohexane (Example 6) was used as a mixed solvent.

### [Example 5]

Example 5 was performed in the same way as in Example 1 with the exception that a substrate film on which an easily adhesive layer (polyurethane layer) had not been formed was used as a raw material shaped product.

### [Example 7]

Example 7 was performed in the same way as in Example 1 with the exception that melt filtration was not performed.

### [Examples 8 and 9]

Examples 8 and 9 were performed in the same way as in Example 1 with the exception that activated clay (produced by Mizusawa Industrial Chemicals, Ltd.; product name: GALLEON EARTH; Example 8) or activated alumina (produced by Sumika Alchem Company, Limited; product name: A-11; Example 9) was used as an adsorbent.

### [Example 10]

Example 10 was performed in the same way as in Example 1 with the exception that the film ground products were passed through a punching plate with a pore of 20 mm to be recovered.

### [Example 11]

Example 11 was performed in the same way as in Example 1 with the exception that a copolymer B (raw material addition-type alicyclic structure-containing polymer resin) produced in Production Example 2 below was used instead of the ring-opening polymer resin for raw material, in production of the raw material shaped product.

### [Production Example 2. Production of raw material addition-type shaped product]

### <<Production of copolymer (copolymer B) of cycloolefin and chain olefin>>

Norbornene (120 kg) was added into a reaction vessel charged with 258 liters of cyclohexane at normal temperature under nitrogen stream to stir these materials for 5 minutes. Triisobutyl aluminum was further added into the vessel such that the concentration in the system was 1.0 mL/liter. Subsequently, ethylene was circulated at normal pressures while stirring these materials to create an ethylene atmosphere in the system. The temperature inside an autoclave was maintained at 70°C, and pressurization was performed with ethylene such that the internal pressure was 6 kg/cm² at gauge pressure. After stirring for 10 minutes, 0.4 liters of preliminarily prepared toluene solution containing isopropylidene(cyclopentadienyl)(indenyl)zirconium dichloride and methylalumoxane was added to the system to initiate copolymerization reaction of ethylene and norbornene. As for the catalyst concentration at this time, isopropylidene(cyclopentadienyl)(indenyl)zirconium dichloride is 0.018 mmol/liter and methylalumoxane is 8.0 mmol/liter, for the total system. During this copolymerization reaction, the system was continuously supplied with ethylene to maintain the temperature at 70°C and the internal pressure at 6 kg/cm² at gauge pressure. After 60 minutes, isopropyl alcohol was added to stop the copolymerization reaction. After depressurization, the polymer solution was taken out and then brought into contact with an aqueous solution containing 5 liters of concentrated hydrochloric acid relative to 1 m³ of water at a ratio of 1:1 under strong stirring to transfer the catalyst residue into the aqueous phase. After this contact mixture was left at rest, the aqueous phase was separated and removed, and the polymerization liquid phase was then purified and separated by performing water washing 2 times.

Next, the purified and separated polymerization liquid phase was brought into contact with 3 times the volume of acetone under strong stirring to precipitate the copolymer, and the solid part (copolymer) was then collected by filtration to be sufficiently washed with acetone. Furthermore, to extract unreacted monomers, this solid part was put into acetone to be 40 kg/m³, and extraction operation was then performed under conditions at 60°C for 2 hours. After extraction treatment, the solid part was collected by filtration and dried under nitrogen circulation at 130°C at 350 mmHg for 12 hours to obtain an ethylene/norbornene copolymer (copolymer B).

The ethylene/norbornene copolymer (copolymer B) was pelletized in the same way as the pellets A of the ring-opening polymer hydrogenated product were produced in A-1-2 of Production Example 1. The weight-average molecular weight (Mw) of the pelletized ethylene norbornene copolymer (copolymer B) was 96,000, the molecular weight distribution (Mw/Mn) was2.4, and Tg was 138°C.

### [Comparative Examples 1 and 2]

Comparative Examples 1 and 2 were performed in the same way as in Example 1 with the exception that a mixed solvent of 99% cyclohexane and 1% methylcyclohexane (Comparative Example 1) or a mixed solvent of 78% cyclohexane and 22% methylcyclohexane (Comparative Example 2) was used as a mixed solvent.

### [Comparative Example 3]

Comparative Example 3 was performed in the same way as in Example 1 with the exception that only cyclohexane was used as a solvent instead of the mixed solvent.

### [Comparative Example 4]

Comparative Example 3 was performed in the same way as in Example 11 with the exception that only cyclohexane was used as a solvent instead of the mixed solvent.

### [Result]

Table 1 presents the results of examples and comparative examples.

**[Table 1]**

| | | Example | | | | | | | | | | | Comparative Example | | | |
|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 4 |
| Each condition of reuse method | Resin shaped product | Ring-opening polymer | Ring-opening polymer | Ring-opening polymer | Ring-opening polymer | Ring-opening polymer | Ring-opening polymer | Ring-opening polymer | Ring-opening polymer | Ring-opening polymer | Ring-opening polymer | Addition-type polymer | Ring-opening polymer | Ring-opening polymer | Ring-opening polymer | Addition-type polymer |
| | Urethane layer | With | With | With | With | Without | With | With | With | With | With | With | With | With | With | With |
| | Grinding | 5 mm | 5 mm | 5 mm | 5 mm | 5 mm | 5 mm | 5 mm | 5 mm | 5 mm | 20 mm | 5 mm | 5 mm | 5 mm | 5 mm | 5 mm |
| | Solvent | Methylcycloh exane 7% | Methylcyclo hexane 7% | Toluene 7% | Methylcyclo hexane 2% | Methylcyclo hexane 7% | Methylcyclo hexane 19% | Methylcyclo hexane 7% | Methylcyclo hexane 7% | Methylcyclo hexane 7% | Methylcyclo hexane 7% | Methylcyclo hexane 7% | Methylcyclo hexane 1% | Methylcyclo hexane 22% | Only cyclohexane | Only cyclohexane |
| | Adsorption | Acid clay | Acid clay | Acid clay | Acid clay | Acid clay | Acid clay | Acid clay | Activated clay | Activated alumina | Acid clay | Acid clay | Acid clay | Acid clay | Acid clay | Acid clay |
| | Filtration | With | With | With | With | With | With | With | With | With | With | With | With | With | With | With |
| | Filtration concentration (%) | 15 | 19 | 15 | 15 | 15 | 15 | 15 | 15 | 15 | 15 | 15 | 15 | 15 | 15 | 15 |
| | A.O addition | With | With | With | With | With | With | With | With | With | With | With | With | With | With | With |
| | Drying | With | With | With | With | With | With | With | With | With | With | With | With | With | With | With |
| | Melt filtration | With | With | With | With | With | With | Without | With | With | With | With | With | With | With | With |
| | Pelletization | With | With | With | With | With | With | With | With | With | With | With | With | With | With | With |
| Evaluation category | Dissolution time | ⊚ | ⊚ | ⊚ | ⊚ | ⊚ | ○ | ⊚ | ⊚ | ⊚ | ○ | ⊚ | ○ | Δ | ○ | ○ |
| | Foreign substance (300 µm or less) | ⊚ | ⊚ | ⊚ | ○ | ⊚ | ○ | Δ | ○ | ○ | ○ | ○ | × | ○ | × | ○ |
| | Die build-up | ⊚ | ⊚ | ⊚ | ⊚ | ⊚ | ⊚ | ⊚ | ⊚ | ⊚ | ⊚ | ○ | ○ | × | ○ | ○ |
| | ΔYi | ⊚ | ⊚ | ⊚ | ⊚ | ⊚ | ⊚ | ⊚ | ○ | ○ | ○ | ○ | Δ | Δ | Δ | ○ |
| | Film appearance defect | A | A | A | A | A | A | A | A | A | A | B | C | C | C | D |
| | Overall judgment | 5 | 5 | 5 | 5 | 5 | 4 | 4 | 4 | 4 | 4 | 3 | 2 | 1 | 2 | 1 |

Abbreviation, etc. in Table 1
A.O: Antioxidant
AYi: Yellowness index

Table 1 presented that using the mixed solvent in the range of this disclosure can obtain excellent results in the respective evaluation categories and that using the mixed solvent in the range of this disclosure enhances the degree of removal of foreign substances of the recycled article of the alicyclic structure-containing polymer resin shaped product. Furthermore, the comparison between Example 11 and Comparative Example 4 presented that the degree of removal of foreign substances of the recycled article is excellent also when this disclosure is applied to the addition-type alicyclic structure-containing polymer resin.

### INDUSTRIAL APPLICABILITY

The presently disclosed method of reusing a resin shaped product can obtain a recycled article of a resin shaped product containing an alicyclic structure-containing polymer having reduced appearance defects and improved physical properties such as color tone.

## Claims

1. A method of reusing a resin shaped product including an alicyclic structure-containing polymer, the method comprising:
grinding the resin shaped product to obtain shaped product ground products; and
dissolving the shaped product ground products in a mixed solvent containing not less than 80 weight% and not more than 98 weight% of cyclohexane and not less than 2 weight% and not more than 20 weight% of a hydrocarbon-based or aromatic solvent having a coagulation point of -40°C or lower per 100 weight% of the mixed solvent to obtain a polymer solution, wherein the coagulation point is measured as the crystallization temperature of the solvent using differential scanning calorimetry.

2. The method of reusing a resin shaped product according to claim 1, further comprising sieving the shaped product ground products with a sieve of not less than φ3 mm and not more than φ15 mm between grinding the resin shaped product and dissolving the shaped product ground products.

3. The method of reusing a resin shaped product according to claim 1 or 2, wherein the solvent has a boiling point of 150°C or lower.

4. The method of reusing a resin shaped product according to any one of claims 1 to 3, further comprising adding an adsorbent to a dissolving system of the shaped product ground products.

5. The method of reusing a resin shaped product according to claim 4, wherein the adsorbent is acid clay, activated clay, activated alumina, or zeolite.

6. The method of reusing a resin shaped product according to any one of claims 1 to 5, further comprising filtering the polymer solution in a solution state to remove foreign substances and an adsorbent.

7. The method of reusing a resin shaped product according to claim 6, wherein a percentage of an amount of the shaped product ground products relative to a total amount of the mixed solvent and the shaped product ground products in the polymer solution when the solution is filtered is not less than 10 weight% and not more than 20 weight%.

8. The method of reusing a resin shaped product according to any one of claims 1 to 7, further comprising removing the mixed solvent from the polymer solution to recover a resin containing an alicyclic structure-containing polymer, melting the recovered resin, and filtering the melted resin in a melted state.

9. The method of reusing a resin shaped product according to any one of claims 1 to 8, wherein the alicyclic structure-containing polymer has a glass-transition temperature of not lower than 70°C and not higher than 170°C.

10. The method of reusing a resin shaped product according to any one of claims 1 to 9, wherein the alicyclic structure-containing polymer is selected from the group consisting of a norbornene-based polymer, a monocyclic olefin-based polymer, a cyclic conjugated diene-based polymer, a vinyl alicyclic hydrocarbon polymer, and hydrogenated products thereof, and the alicyclic structure-containing polymer is an amorphous resin.

11. The method of reusing a resin shaped product according to any one of claims 1 to 10, wherein the resin shaped product as a raw material has a urethane layer with a thickness of 100 nm or less.

## Patentansprüche

1. Verfahren zur Wiederverwendung eines Harzformkörpers beinhaltend ein Polymer mit alicyclischer Struktur, wobei das Verfahren umfasst:
Mahlen des Harzformkörpers, um Formkörpermahlgut zu erhalten; und
Lösen des Formkörpermahlguts in einem Lösungsmittelgemisch enthaltend nicht weniger als 80 Gew.-% und nicht mehr als 98 Gew.-% Cyclohexan und nicht weniger als 2 Gew.-% und nicht mehr als 20 Gew.-% eines kohlenwasserstoffbasierten oder aromatischen Lösungsmittels mit einem Koagulationspunkt von -40 °C oder weniger pro 100 Gew.-% des Lösungsmittelgemischs, um eine Polymerlösung zu erhalten, wobei der Koagulationspunkt als die Kristallisationstemperatur des Lösungsmittels mittels Differential-Scanning-Kalorimetrie gemessen wird.

2. Verfahren zur Wiederverwendung eines Harzformkörpers gemäß Anspruch 1, ferner umfassend Sieben des Formkörpermahlguts mit einem Sieb von nicht weniger als φ3 mm und nicht mehr als φ15 mm zwischen dem Mahlen des Harzformkörpers und dem Lösen des Formkörpermahlguts.

3. Verfahren zur Wiederverwendung eines Harzformkörpers gemäß Anspruch 1 oder 2, wobei das Lösungsmittel einen Siedepunkt von 150 °C oder weniger aufweist.

4. Verfahren zur Wiederverwendung eines Harzformkörpers gemäß einem der Ansprüche 1 bis 3, ferner umfassend Zugeben eines Adsorbens zu einem Lösungssystem des Formkörpermahlguts.

5. Verfahren zur Wiederverwendung eines Harzformkörpers gemäß Anspruch 4, wobei das Adsorbens saurer Ton, aktivierter Ton, aktiviertes Aluminiumoxid oder Zeolith ist.

6. Verfahren zur Wiederverwendung eines Harzformkörpers gemäß einem der Ansprüche 1 bis 5, ferner umfassend Filtrieren der Polymerlösung in gelöstem Zustand, um Fremdstoffe und ein Adsorbens zu entfernen.

7. Verfahren zur Wiederverwendung eines Harzformkörpers gemäß Anspruch 6, wobei der prozentuale Anteil der Menge des Formkörpermahlguts bezogen auf die Gesamtmenge des Lösungsmittelgemischs und des Formkörpermahlguts in der Polymerlösung beim Filtrieren der Lösung nicht weniger als 10 Gew.-% und nicht mehr als 20 Gew.-% beträgt.

8. Verfahren zur Wiederverwendung eines Harzformkörpers gemäß einem der Ansprüche 1 bis 7, ferner umfassend Entfernen des Lösungsmittelgemischs aus der Polymerlösung, um ein Harz enthaltend ein Polymer mit alicyclischer Struktur zurückzugewinnen, Schmelzen des zurückgewonnenen Harzes und Filtrieren des geschmolzenen Harzes im geschmolzenen Zustand.

9. Verfahren zur Wiederverwendung eines Harzformkörpers gemäß einem der Ansprüche 1 bis 8, wobei das Polymer mit alicyclischer Struktur eine Glasübergangstemperatur von nicht weniger als 70 °C und nicht mehr als 170 °C aufweist.

10. Verfahren zur Wiederverwendung eines Harzformkörpers gemäß einem der Ansprüche 1 bis 9, wobei das Polymer mit alicyclischer Struktur ausgewählt ist aus der Gruppe bestehend aus einem Polymer auf Norbornenbasis, einem Polymer auf Basis eines monocyclischen Olefins, einem Polymer auf Basis eines cyclischen konjugierten Diens, einem vinylalicyclischen Kohlenwasserstoffpolymer, und deren hydrierten Produkten, und das Polymer mit alicyclischer Struktur ein amorphes Harz ist.

11. Verfahren zur Wiederverwendung eines Harzformkörpers gemäß einem der Ansprüche 1 bis 10, wobei der Harzformkörper als Rohmaterial eine Urethanschicht mit einer Dicke von 100 nm oder weniger aufweist.

## Revendications

1. Procédé de réutilisation d'un produit moulé en résine comprenant un polymère contenant une structure alicyclique, le procédé comprenant :
le broyage du produit moulé en résine afin d'obtenir des produits broyés du produit moulé ; et
la dissolution des produits broyés du produit moulé dans un solvant mixte comprenant au moins 80 % en poids et au plus 98 % en poids de cyclohexane et au moins 2 % en poids et au plus 20 % en poids d'un solvant à base d'hydrocarbure ou d'un solvant aromatique ayant un point de coagulation de -40 °C ou moins pour 100 % en poids du solvant mixte afin d'obtenir une solution polymère, lequel point de coagulation est mesuré comme la température de cristallisation du solvant à l'aide de la calorimétrie différentielle à balayage.

2. Procédé de réutilisation d'un produit moulé en résine selon la revendication 1, comprenant en outre le tamisage des produits broyés du produit moulé avec un tamis d'un diamètre d'au moins φ3 mm et d'au plus φ15 mm entre le broyage du produit moulé en résine et la dissolution des produits broyés du produit moulé.

3. Procédé de réutilisation d'un produit moulé en résine selon la revendication 1 ou 2, lequel solvant a un point d'ébullition de 150 °C ou moins.

4. Procédé de réutilisation d'un produit moulé en résine selon l'une quelconque des revendications 1 à 3, comprenant en outre l'ajout d'un adsorbant à un système de dissolution des produits broyés du produit moulé.

5. Procédé de réutilisation d'un produit moulé en résine selon la revendication 4, dans lequel l'adsorbant est une argile acide, une argile activée, une alumine activée ou une zéolithe.

6. Procédé de réutilisation d'un produit moulé en résine selon l'une quelconque des revendications 1 à 5, comprenant en outre la filtration de la solution polymère à l'état de solution afin d'effectuer l'élimination de substances étrangères et d'un adsorbant.

7. Procédé de réutilisation d'un produit moulé en résine selon la revendication 6, dans lequel le pourcentage de la quantité des produits broyés du produit moulé par rapport à la quantité totale du solvant mixte et des produits broyés du produit moulé dans la solution polymère lors de la filtration de la solution est d'au moins 10 % en poids et d'au plus 20 % en poids.

8. Procédé de réutilisation d'un produit moulé en résine selon l'une quelconque des revendications 1 à 7, comprenant en outre l'élimination du solvant mixte de la solution polymère afin d'effectuer la récupération d'une résine comprenant un polymère contenant une structure alicyclique, la fusion de la résine récupérée, et la filtration de la résine fondue à l'état fondu.

9. Procédé de réutilisation d'un produit moulé en résine selon l'une quelconque des revendications 1 à 8, dans lequel le polymère contenant une structure alicyclique a une température de transition vitreuse d'au moins 70 °C et d'au plus 170 °C.

10. Procédé de réutilisation d'un produit moulé en résine selon l'une quelconque des revendications 1 à 9, dans lequel le polymère contenant une structure alicyclique est choisi dans le groupe constitué d'un polymère à base de norbornène, d'un polymère à base d'oléfine monocyclique, d'un polymère à base de diène conjugué cyclique, d'un polymère d'hydrocarbure alicyclique vinylique, et de leurs produits hydrogénés, et lequel polymère contenant une structure alicyclique est une résine amorphe.

11. Procédé de réutilisation d'un produit moulé en résine selon l'une quelconque des revendications 1 à 10, dans lequel le produit moulé en résine en tant que matière première a une couche d'uréthane d'une épaisseur de 100 nm ou moins.
